# EUROPÄISCHE PATENTSCHRIFT

(11) **EP 2 378 005 B1**
(45) Veröffentlichungstag und Bekanntmachung des Hinweises auf die Patenterteilung: **01.01.2014**
(21) Anmeldenummer: 11161147.1
(22) Anmeldetag: 05.04.2011
(51) Int. Cl.: F16L 37/36, E02F 3/36, E02F 9/22

(54) **Schnellwechselvorrichtung zum Ankoppeln eines Werkzeugs an eine Arbeitsmaschine**
Quick coupler for coupling a tool to a work machine
Attache rapide pour l'accouplement d'un outil sur une machine de travail

(30) Priorität: 16.04.2010 DE 102010016490
(43) Veröffentlichungstag der Anmeldung: 19.10.2011
(73) Patentinhaber: Lehnhoff Hartstahl GmbH & Co. KG, 76534 Baden-Baden (DE)
(72) Erfinder: Laurito, Leone, 67240 Schirrhein (FR); Lehnhoff, Peter A., 77815 Bühl-Vimbuch (DE); Rotard, Jan, 80804 München (DE)
(74) Vertreter: Borchert, Uwe Rudolf

(56) Entgegenhaltungen:
- EP-A2- 0 963 688
- DE-A1-102006 023 420
- DE-T2- 60 102 711
- US-A- 4 955 779

## Beschreibung

Die Erfindung betrifft eine Schnellwechselvorrichtung zum Ankoppeln eines Werkzeugs an eine Arbeitsmaschine gemäß der im Oberbegriff des Anspruches 1 angegebenen Art.

Derartige Schnellwechselvorrichtungen sind für Erdbewegungsmaschinen, wie z. B. Bagger, um einen einfachen und schnellen Wechsel zwischen diversen hydraulischen Werkzeugen, wie beispielsweise Sieblöffel, Schwenklöffel, Hydraulikhammer oder dergleichen zu ermöglichen, hinreichend bekannt.

Eine gattungsgemäße Schnellwechselvorrichtung ist in der WO 91/01414 offenbart. Die offenbarte Schnellwechselvorrichtung weist einen eine Schwenk- und Verriegelungseinrichtung umfassenden, dem Bagger zugeordneten Schnellwechsler sowie einen, dem Werkzeug zugeordneten Adapter auf. Neben Mittel zur Herstellung einer mechanischen Verbindung zwischen Schnellwechsler und Adapter ist eine automatische, ein baggerseitiges und ein werkzeugseitiges Kupplungsteil umfassende, hydraulische Kupplung vorgesehen, die beim Zusammenschwenken der beiden Kupplungsteile automatisch einen baggerseitigen Hydraulikkreislauf mit einem werkzeugseitigen Hydraulikkreislauf kuppelt. Weiterführende Handlungen seitens des Maschinenführers, nämlich Verlassen des Führerhauses des Baggers und händische Herstellung der hydraulischen Kupplung zwischen dem baggerseitigen und dem werkzeugseitigen Hydraulikkreislauf, sind nicht erforderlich. Als nachteilig erweist sich jedoch der Umstand, dass im Falle eines Nichtöffnen des werkzeugseitigen Kupplungsteils, z. B. aufgrund eines Defektes, Verschmutzung oder dergleichen, die automatisierte Öffnung des baggerseitigen Kupplungsteils den Austritt einer erheblichen Menge von Hydraulikflüssigkeit zur Folge hat.

Die EP 0 963 688 A2 offenbart eine Arbeitsmaschine, insbesondere für Tiefbauarbeiten, mit einem auswechselbaren, druckmittelangetriebenen Werkzeug, bei der für die Auswechslung des Werkzeugs ein Schnellwechsel-Kupplungssystem angeordnet ist. Das Schnellwechsel-Kupplungssystem weist eine mechanische Kupplung und wenigstens eine Fluidkupplung, wobei an der maschinenseitigen Kupplung einerseits und am Werkzeug andererseits je eine Kupplungskomponente der wenigstens einen Fluidkupplung in einer derartigen Relativstellung angeordnet sind, dass sie bei eingerasteter mechanischer Kupplung einander in vorbestimmtem Abstand gegenüber liegen, und wobei wenigstens eine der Kupplungskomponenten in Richtung auf die andere Kupplungskomponente zur Erzielung der Schließstellung der Kupplung bewegbar ist. Hierbei zeichnet sich die Arbeitsmaschine dadurch aus, dass die Kupplungskomponenten zum Ausgleich von Fluchtungsfehlem insbesondere durch Gelenklager lageeinstellbar gehalten sind.

Der Erfindung liegt die Aufgabe zugrunde, eine Schnellwechselvorrichtung zum Ankuppeln eines Werkzeugs an eine Arbeitsmaschine gemäß der im Oberbegriff des Anspruches 1 angegebenen Art unter Vermeidung der genannten Nachteile derart weiterzubilden, dass die Gefahr eines Austritts von Hydraulikflüssigkeit minimiert ist.

Diese Aufgabe wird durch die kennzeichnenden Merkmale des Anspruches 1 in Verbindung mit seinen Oberbegriffsmerkmalen gelöst.

Die Unteransprüche bilden eine vorteilhafte Weiterbildung der Erfindung.

In bekannter Art und Weise umfasst die Schnellwechselvorrichtung einen an einer Arbeitsmaschine befestigten Schnellwechsler und einen an einem Werkzeug befestigten Adapter sowie eine zwischen Schnellwechsler und Adapter wirksame Verriegelungseinrichtung zur Herstellung einer mechanischen Kopplung zwischen Arbeitsmaschine und Werkzeug. Zur Herstellung einer Hydraulikverbindung zwischen Arbeitsmaschine und Werkzeug umfasst die Schnellwechselvorrichtung zudem eine hydraulische Kupplung. Die hydraulische Kupplung ihrerseits weist dem Schnellwechsler zugeordnete schnellwechslerseitige Kupplungsventile und dem Adapter zugeordnete adapterseitige Kupplungsventile auf. Nach Herstellung der mechanischen Kopplung zwischen Arbeitsmaschine und Werkzeug liegen die schnellwechslerseitigen und adapterseitigen Kupplungsventile aufeinander und sind fluchtgenau zueinander positioniert sowie relativ zueinander gehalten.

Erfindungsgemäß sind die schnellwechselseitigen Kupplungsventile und die adapterseitigen Kupplungsventile als aktive, mittels Energiezufuhr betätigbare Ventile ausgebildet. Die aktiven Kupplungsventile sind hierbei erfindungsgemäß derart angesteuert, dass nach Herstellung der mechanischen Kopplung zwischen Arbeitsmaschine und Werkzeug mittels Energiezufuhr zunächst die adapterseitigen Kupplungsventile geöffnet werden und anschließend - nachdem die adapterseitigen Kupplungsventile geöffnet sind - die schnellwechselseitigen Kupplungsventile mittels Energiezufuhr geöffnet werden.

In vorteilhafter Weise ist durch erfindungsgemäße Reihenfolge der Ventilöffnung sichergestellt, dass Hydraulikflüssigkeit erst nach dem Öffnen der adapterseitigen Kupplungsventile fließen kann. Dadurch ist gewährleistet, dass auch bei einer z.B. durch Verschmutzung oder Defekt bedingten Fehlfunktion und Nichtöffnung des adapterseitigen Kupplungsventil keine Hydraulikflüssigkeit austreten kann, da erfindungsgemäß in diesem Fall das schnellwechslerseitige Kupplungsventil noch geschlossen ist. Ein weiterer Vorteil ist, dass aufgrund der erfindungsgemäßen Ausbildung und Ansteuerung der Kupplungsventile sichergestellt ist, dass ein "versehentliches" Öffnen des schnellwechslerseitigen Kupplungsventils, d.h. Öffnen des schnellwechslerseitigen Kupplungsventils obwohl ein Werkzeug ohne hydraulische Funktion, beispielsweise ein Tieflöffel bzw. kein Werkzeug am Schnellwechsler angekoppelt ist, nunmehr ausgeschlossen ist.

Gemäß einer besonders vorteilhaften Ausführungsform sind die schnellwechselseitigen und die adapterseitigen Kupplungsventile als aktive, hydraulisch bestätigbare Ventile ausgebildet. Zudem weist die hydraulische Kupplung weiterhin mindestens ein erstes und mindestens ein zweites Steuerventile mit jeweils einem schnellwechslerseitigen und einen adapterseitigen Ventilabschnitt auf. Hierbei sind die Steuerventile über einen Steuerkreislauf derart miteinander, den aktiven hydraulischen Kupplungsventilen sowie dem Hydrauliksystem der Arbeitsmaschine verbunden, dass nach Herstellung der mechanischen Kopplung zwischen Arbeitsmaschine und Werkzeug zum Öffnen der Kupplungsventile zunächst ein Zufluss von Hydraulikflüssigkeit über das bzw. die ersten Steuerventile vom Schnellwechsler zum Adapter und von dort zu den adapterseitigen Kupplungsventile und anschließend, d.h. nachdem die adapterseitigen Kupplungsventile geöffnet sind, vom Adapter über das bzw. die zweiten Steuerventile zum Schnellwechsler und von dort zu den schnellwechslerseitigen Kupplungsventile erfolgt. Das Schließen der Kupplungsventile über den Steuerkreislauf erfolgt vice versa, d. h. Rückfluss von Hydraulikflüssigkeit von den schnellwechslerseitigen Kupplungsventilen über das bzw. die zweiten Steuerventile zum Werkzeug - Schließen der schnellwechslerseitigen Kupplungsventile - und anschließendem Rückfluss von Hydraulikflüssigkeit von den adapterseitigen Kupplungsventile über das bzw. die ersten Steuerventile zum Schnellwechsler - Schließen der adapterseitigen Kupplungsventile - und Rückfluss in das vorhandene Hydrauliksystem der Arbeitsmaschine. Diese Ausführungsform erweist sich aufgrund ihrer konstruktiven Einfachheit als besonders vorteilhaft, da auf aufgrund der Ausbildung der Kupplungsventile als hydraulische Ventile zur Ansteuerung der Ventile auf den vorhandenen Hydraulikreislauf der Arbeitsmaschine zurückgegriffen werden kann.

In einer besonders vorteilhaften Ausgestaltung der Erfindung handelt sich bei den ersten und zweiten Steuerventilen um sogenannte Kurzhubventile, bei denen ein Hub von beispielsweise 1 bis 5 Millimeter ausreicht, um das Ventil zu betätigen. Dies erweist sich als besonders vorteilhaft, da aufgrund der geringen Ventilhübe eine kompakte Bauweise realisierbar ist.

Gemäß einer anderen Ausführungsform sind die schnellwechselseitigen und adapterseitigen Kupplungsventile als aktive, mechanisch, pneumatisch oder elektromagnetisch betätigbare Ventile ausgebildet.

Weitere Vorteile, Merkmale und Anwendungsmöglichkeit der vorliegenden Erfindung ergeben sich aus der nachfolgenden Beschreibung in Verbindung mit dem in der Zeichnung dargestellten Ausführungsbeispiel.

Die Erfindung wird im Folgenden anhand des in der Zeichnung dargestellten Ausführungsbeispiels näher beschrieben.

In der Beschreibung, in den Patentansprüchen, in der Zusammenfassung und in der Zeichnung werden die in der hinten angeführten Liste der Bezugszeichen verwendeten Begriffe und zugeordnete Bezugszeichen verwendet. In der Zeichnung bedeutet:
- Fig. 1: Eine perspektivische Darstellung einer Schnellwechselvorrichtung mit einem Schnellwechsler und einem Adapter, wobei der Schnellwechsler mit einem Baggerstiel und der Adapter mit einem Sieblöffel verbunden ist;
- Fig. 2: eine vergrößerte Darstellung des Schnellwechslers aus Fig, 1;
- Fig. 3: einen Ausschnitt der Kupplung des Schnellwechsler in einer vergrößerten Schnittdarstellung, und
- Fig. 4: eine schematische Darstellung der hydraulischen Ansteuerung der hydraulisch aktiv betätigbaren Kupplungsventile

In der nachfolgenden Beschreibung und in den Figuren werden zur Vermeidung von Wiederholungen gleiche Bauteile und Komponenten mit gleichen Bezugszeichen gekennzeichnet, sofern keine weitere Differenzierung erforderlich oder sinnvoll ist.

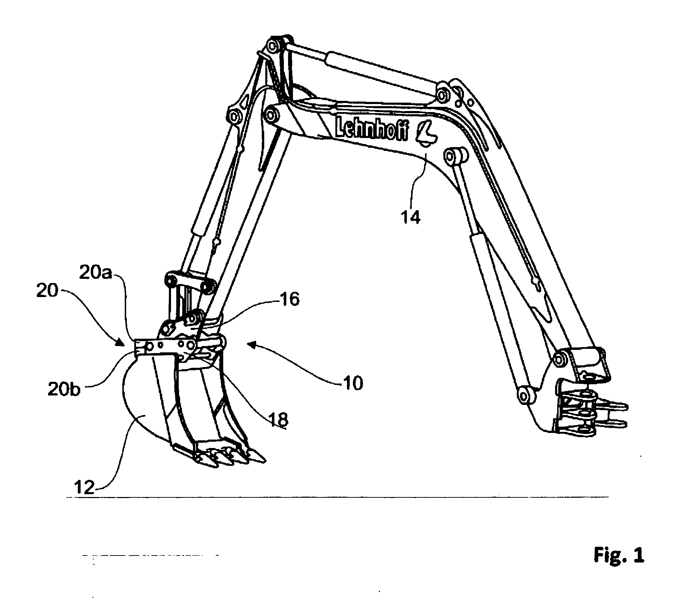

Fig. 1 zeigt eine Schnellwechselvorrichtung 10 über die ein Sieblöffel 12 lösbar an einem Bagger 14 befestigt ist. Aus Gründen der Übersichtlichkeit ist vorliegend lediglich der Ausleger des Baggers 14 dargestellt.

Die Schnellwechselvorrichtung 10 umfasst einen mit dem Ausleger verbundenen Schnellwechsler 16 und einen am Sieblöffel 12 angeordneten Adapter 18. Über eine - hier nicht näher dargestellte und beschriebene - Verriegelungseinrichtung ist in bekannter Art und Weise eine mechanische Kopplung zwischen Schnellwechsler 16 und Adapter 18 herstellbar, so dass ein einfacher und schneller Werkzeugwechsel, beispielsweise Ablegen des dargestellten Sieblöffels 12 und Aufnahme eines Hydraulikhammers oder dergleichen ermöglicht ist.

Zum Anschluss des Werkzeugs, beispielsweise des dargestellten Sieblöffels 12, an das Hydrauliksystems des Baggers, weist die Schnellwechselvorrichtung 10 zudem eine insgesamt mit dem Bezugszeichen 20 bezeichnete hydraulische Kupplung auf. Die hydraulische Kupplung 20 ihrerseits umfasst mehrere in einem schnellwechslerseitigen Kupplungsblock 20a angeordnete Kupplungsventile 22, 23 vgl.

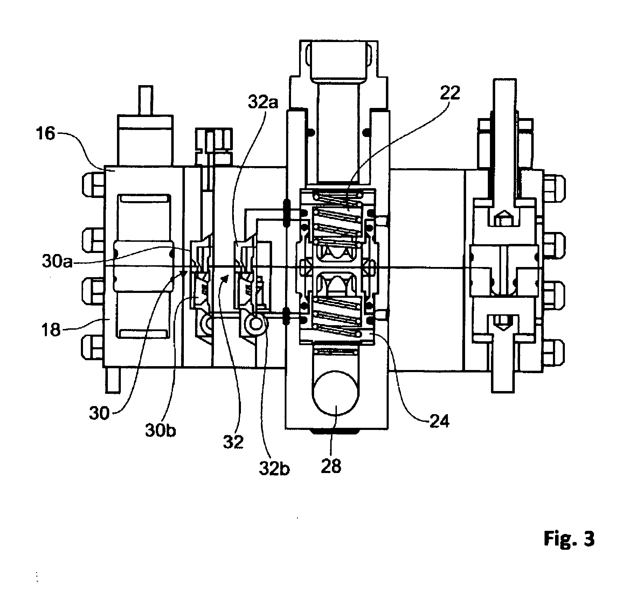

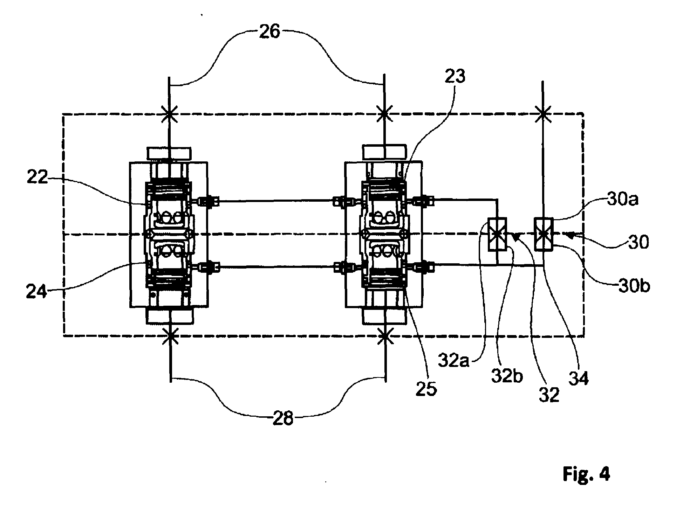

Fig. 3 und 4, sowie mehrere in einem adapterseitigen Kupplungsblock 20b angeordnete adapterseitige Kupplungsventile 24 und 25, vgl. Fig. 3 und 4.

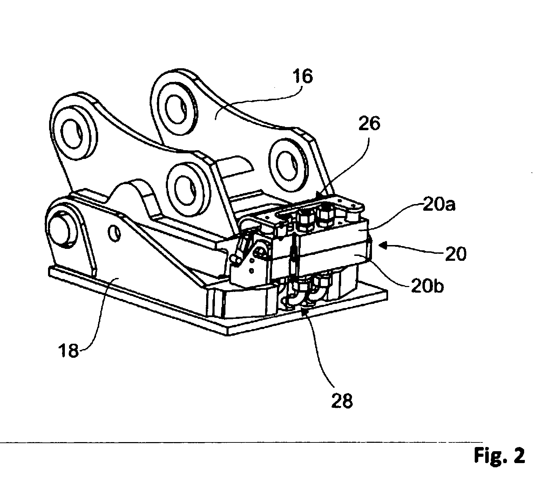

Wie insbesondere aus Fig. 2 ersichtlich, sind im verriegelten Zustand die beiden Kupplungsblöcke 20a, 20b und damit die in den Kupplungsblöcken 20a, 20b befindlichen Kupplungsventile 22 23; 24, 25, vgl. Fig. 3 und 4, fluchtgenau übereinanderliegend angeordnet, so dass ein Zu- und Rückfluss von Hydraulikflüssigkeit vom Hydrauliksystems des Baggers über Hydraulikleitungen 26, den Kupplungsblöcken 20a, 20b über Hydraulikleitungen 28 gewährleistet ist.

Fig. 3 zeigt in einer Schnittdarstellung die fluchtgenau aufeinanderliegend angeordneten Kupplungsblöcke 20a, 20b sowie die bereits erwähnten Kupplungsventile, nämlich ein schnellwechslerseitiges Kupplungsventil 22 und ein adapterseitiges Kupplungsventil 24. Bei dem Kupplungsventile 22, 24 handelt es sich um aktive, hydraulische betätigbare Ventile. Aktiv hydraulisch betätigbar bedeutet, dass die Kupplungsventile 22, 24 nicht zwangsläufig beim Verbinden der Kupplungsblöcke 20a, 20b öffnen, sondern durch Zufuhr/Abfuhr von Hydraulikflüssigkeit aktiv geöffnet oder geschlossen werden. Weiterhin zeigt Fig. 3 ein erstes Steuerventil 30 und ein zweites Steuerventil 32 zur aktiven Ansteuerung der Kupplungsventile 22, 24

Wie aus Fig. 4 ersichtlich, stehen die beiden Steuerventile 30, 32 über einen Steuerkreislauf 34 mit den Kupplungsventile 22, 23; 24, 25 und den Hydraulikkreislauf des Baggers in Wirkverbindung. Die Steuerventile 30, 32 weisen jeweils einen schnellwechslerseitigen Ventilabschnitt 30a, 32 a und einen adapterseitigen Ventilabschnitt 30b, 32b auf. Nach Herstellung der mechanischen Kopplung zwischen Schnellwechsler 16 und Adapter 18 erfolgt ein Zufluss von Hydraulikflüssigkeit vom Hydrauliksystems des Baggers über den Schnellwechsler 16 und den schnellwechslerseitigen Ventilabschnitt 30a und dem adapterseitigen Ventilabschnitt 30b des ersten Steuerventil 30 in den Adapter 18 und von dort zu den adapterseitigen Kupplungsventilen 24, 25. Durch den Zufluss der Hydraulikflüssigkeit werden die adapterseitigen Kupplungsventil 24, 25 aktiv geöffnet. Anschließend fließt die Hydraulikflüssigkeit vom Adapter 18 über den adapterseitigen Ventilabschnitt 32b und den schnellwechslerseitigen Ventilabschnitt 32a des zweiten Steuerventils 32 in den Schnellwechsler 16 zu den schnellwechslerseitigen Kupplungsventilen 22, 23 die wiederum durch den Zufluss der Hydraulikflüssigkeit aktiv geöffnet werden. Aufgrund dieser Ansteuerung ist sichergestellt, dass das Öffnen der schnellwechslerseitigen Kupplungsventile 22 und 23 erst nach dem Öffnen der adapterseitigen Kupplungsventile 24, 25 erfolgt. Außerdem ist das Öffnen der schnellwechslerseitigen Kupplungsventile 22, 23 nur möglich, wenn der Schnellwechsler in einen Adapter eingekuppelt ist. Dies verhindert ein Öffnen der schnellwechslerseitigen Ventile, wenn ein Werkzeug ohne hydraulische Verbraucher, beispielsweise ein Tieflöffel, angekuppelt wurde.

Das Schließen der Kupplungsventile 22, 23, sowie 24, 25 erfolgt in umgekehrter Reihenfolge. D.h. es erfolgt ein Rückfluss von Hydraulikflüssigkeit von den schnellwechslerseitigen Kupplungsventilen 22, 23, d.h. Schließen der schnellwechslerseitigen Kupplungsventile 22, 23, über den schnellwechslerseitigen Ventilabschnitt 32a und den adapterseitigen Ventilabschnitt 32b des zweiten Steuerventil 32 in den Adapter 18. Anschließend Rückfluss von Hydraulikflüssigkeit von den adapterseitigen Kupplungsventilen 24 und 25 d.h. Schließen der adapterseitigen Kupplungsventile 24, 25, und Rückfluss der Hydraulikflüssigkeit über den adapterseitigen Ventilabschnitt 30b und den schnellwechslerseitigen Ventilabschnitt 30a des ersten Steuerventils 30 zum Schnellwechsler 16 und von dort zum Hydraulikkreislauf des Baggers.

### Bezugszeichenliste

- 10: Schnellwechslervorrichtung
- 12: Sieblöffel/Werkzeug
- 14: Bagger/Arbeitsmaschine
- 16: Schnellwechsler
- 18: Adapter
- 20: hydraulische Kupplung
- 20a: schnellwechslerseitiger Kupplungsblock
- 20b: adapterseitiger Kupplungsblock
- 22: schnellwechslerseitiges Kupplungsventil
- 23: schnellwechslerseitiges Kupplungsventil
- 24: adapterseitiges Kupplungsventil
- 25: adapterseitiges Kupplungsventil
- 26: Hydraulikleitungen
- 28: Hydraulikleitungen
- 30: erstes Steuerventil
- 30a: schnellwechslerseitiger Ventilabschnitt des ersten Steuerventils
- 30b: adapterseitiger Ventilabschnitt des ersten Steuerventils
- 32: zweites Steuerventil
- 32a: schnellwechslerseitiger Ventilabschnitt des zweiten Steuerventils
- 32b: adapterseitiger Ventilabschnitt des zweiten Steuerventils
- 34: Steuerkreislauf

## Patentansprüche

1. Schneltwechselvorrichtung (10) zum Ankuppeln eines Werkzeugs (12) an eine Arbeitsmaschine (14), umfassend
- einen an der Arbeitsmaschine (14) befestigten Schnellwechsler (16),
- einen an dem Werkzeug (12) befestigten Adapter (18),
- eine zwischen Schnellwechsler (16) und Adapter (18) wirksame Verriegelungseinrichtung zur Herstellung einer mechanischen Kopplung zwischen Arbeitsmaschine (14) und Werkzeug (12), sowie
- eine hydraulische Kupplung (20) zum Herstellen einer Hydraulikverbindung zwischen einem an der Arbeitsmaschine (14) vorhandenen Hydrauliksystem und einem Hydrauliksystem des Werkzeugs (12), wobei die hydraulische Kupplung (20) dem Schnellwechsler (16) zugeordnete schnellwechselseitige Kupplungsventile (22, 23) und dem Adapter (18) zugeordnete adapterseitige Kupplungsventile (24, 25) aufweist, die nach Herstellung der mechanischen Kopplung zwischen Arbeitsmaschine (14) und Werkzeug (12) fluchtgenau zueinander aufeinanderliegend positioniert und relativ zueinander gehalten sind, wobei die schnellwechselseitigen Kupplungsventile (22, 23) und die adapterseitigen Kupplungsventile (24, 25) als aktive, mittels Energiezufuhr betätigbare Ventile ausgebildet sind, **dadurch gekennzeichnet, dass** die schnellwechselseitigen Kupplungsventile (22, 23) und die adapterseitigen Kupplungsventile (24, 25) nach Herstellung der mechanischen Kopplung zwischen Arbeitsmaschine (14) und Werkzeug (12) derart angesteuert sind, dass bei Energiezufuhr zunächst die adapterseitigen Kupplungsventile (24, 25) und anschließend die schnellwechselseitigen Kupplungsventile (22, 23) aktiv geöffnet werden.

2. Schnellwechselvorrichtung (10) nach Anspruch 1, **dadurch gekennzeichnet, dass** die schnellwechselseitigen und die adapterseitigen Kupplungsventile (22, 23; 24, 25) als aktive, hydraulisch betätigbare Ventile ausgebildet sind und dass die hydraulische Kupplung (20) zudem mindestens ein erstes und mindestens ein zweites Steuerventil (30, 32) mit jeweils einem schnellwechslerseitigen und einem adapterseitigen Ventilabschnitt (30a, 32a; 30b, 32b) aufweist, wobei die Steuerventile (30, 32) über einen Steuerkreislauf (34) derart miteinander, den aktiven hydraulischen Kupplungsventilen (22, 23; 24, 25) und dem Hydrauliksystem der Arbeitsmaschine verbunden sind, dass über den Steuerkreislauf (34) zunächst ein Zufluss von Hydraulikflüssigkeit über das/die erste(n) Steuerventil(e) (30) vom Schnellwechsler (16) zum Adapter (18) und den adapterseitigen Kupplungsventile (24, 25) - Öffnen der werkzeugseitigen Kupplungsventile (24, 25)- und anschließend ein Zufluss von Hydraulikflüssigkeit vom Adapter(18) über das/die zweite(n) Steuerventil(e) (32) zum Schnellwechsler (16) und den schnellwechslerseitigen Kupplungsventile (22, 23) - Öffnen der schnellwechslerseitigen Kupplungsventile (22, 23) - erfolgt und beim Schließen der Kupplungsventile (22, 23; 24, 25) ein Rückfluss von Hydraulikflüssigkeit von den schnellwechslerseitigen Kupplungsventile (22, 23) über das/die zweite(n) Steuerventil(e) (32) zum Adapter (18) - Schließen der schnellwechslerseitigen Kupplungsventile (22, 23) - und anschließenden Rückfluss von den adapterseitigen Kupplungsventilen (24, 25) über das/die erste(n) Steuerventil(e) (30) zum Schnellwechsler (16) - Schließen der werkzeugseitigen Kupplungsventile (24, 25) - erfolgt.

3. Schnellwechselvorrichtung (10) nach Anspruch 2, **dadurch gekennzeichnet, dass** die Steuerventile (30, 32) als Kurzhubventile ausgebildet sind.

4. Schnellwechselvorrichtung (10) nach Anspruch 1, **dadurch gekennzeichnet, dass** die schnellwechselseitigen und die adapterseitigen Kupplungsventile (22, 23; 24, 25) als aktive, mechanisch, pneumatisch oder elektromagnetisch betätigbare Ventile ausgebildet sind.

## Claims

1. A quick-change device (10) for coupling a tool (12) to a machine (14), comprising
- a quick-change element (16) mounted on said machine (14),
- an adapter (18) mounted on said tool (12),
- locking means acting between said quick-change element (16) and said adapter (18) for mechanically coupling said machine (14) to said tool (12), and
- a hydraulic coupling (20) for accomplishing a hydraulic connection between a hydraulic system provided on the machine (14) and a hydraulic system of said tool (12), which hydraulic coupling (20) includes coup-ling valves (22, 23) which are associated with, and provided on the side of, said quick-change element (16), and coupling valves (24, 25) that are associated with, and provided on the side of, said adapter (18), which valves will be precisely aligned on top of each other and held relative to each other once the machine (14) and the tool (12) have been mechanically coupled, with said coupling valves (22, 23) on the side of the quick-change element and said coupling valves (24, 25) on the side of the adapter being formed as active valves which can be actuated by supplying energy to them **characterized in that** once the machine (14) has been mechanically coupled to the tool 12), the coupling valves (22, 23) on the side of the quick-change element and the coupling valves (24, 25) on the side of the adapter will be controlled in such a way that energy fed to the valves will first cause the coupling valves (24, 25) on the side of the adapter and then the coupling valves (22, 23) on the side of the quick-change element to be actively opened.

2. The quick-change device (10) of claim 1 **characterized in that** the coupling valves (22, 23; 24, 25) provided on the side of the quick-change element and on the side of the adapter, resp., are formed as active valves which can be actuated hydraulically, and that the hydraulic coupling (20) furthermore includes at least one first and at least one second control valve (30, 32) each having a valve portion (30a, 32a; 30b, 32b) on the side of the quick-change element and on the side of the adapter each, said control valves (30, 32) being connected to each other, to the active hydraulic coupling valves (22, 23; 24, 25) and to the hydraulic system of the machine in such a way that the control circuit (34) will first feed a hydraulic fluid flow from the quick-change element (16) to the adapter (18) and the coupling valves (24, 25) on the side of the adapter via said one or plural first control valve(s) (30) - thus opening the coupling valves (24, 25) on the side of the tool - and subsequently a hydraulic fluid flow will be fed from the adapter (18) to the quick-change element (16) and the coupling valves (22, 23) on the side of the quick-change element via the one or plural second control valve(s)(32)- thus opening the coupling valves (22, 23) on the side of the quick-change element - and as said coupling valves (22, 23; 24, 25) are closed, a hydraulic fluid return flow from the coupling valves (22, 23) on the side of the quick-change element will be fed to the adapter (18) via the one or plural second control valve(s) (32) - thus closing the coupling valves (22, 23) on the adapter side - and subsequently a return flow from the coupling valves (24, 25) on the side of the adapter will be fed to the quick-change element (16) via said one or plural first control valve(s) (30) - thus closing the coupling valves (24, 25) on the side of the tool.

3. The quick-change device (10) of claim 2 **characterized in that** said control valves (30, 32) are in the form of short-lift valves.

4. The quick-change device (10) of claim 1 **characterized in that** said coupling valves (22, 23; 24, 25) provided on the side of the quick-change element and on the side of the adapter, resp., are in the form of active valves which can be actuated mechanically, pneumatically or electro-magnetically.

## Revendications

1. Dispositif de changement rapide (10) pour l'attelage d'un outil (12) à une machine (14), comprenant :
- un échangeur rapide (16) fixé sur la machine (14),
- un adaptateur (18) fixé à l'outil (12),
- un dispositif de verrouillage agissant entre l'échangeur rapide (16) et l'adaptateur (18) destiné à réaliser l'accouplement mécanique entre la machine (14) et l'outil (12), ainsi que
- un raccord hydraulique (20) visant à réaliser une liaison hydraulique entre un système hydraulique présent sur la machine (14) et un système hydraulique relevant de l'outil (12), le raccord hydraulique (20) présentant des valves d'embrayage (22, 23) associées à l'échangeur rapide (16) du côté de changement rapide, ainsi que, du côté de l'adaptateur, des valves d'embrayage (24, 25) associées à l'adaptateur (18), qui, une fois l'accouplement mécanique réalisé entre la machine (14) et l'outil (12), sont alignées avec précision l'une à côté de l'autre, puis maintenues en relation l'une par rapport à l'autre, les valves d'embrayage du côté de changement rapide (22, 23) et les valves d'embrayage du côté de l'adaptateur (24, 25) étant formées comme des valves actives actionnées par l'alimentation d'énergie, **caractérisé en ce que**, une fois l'accouplement mécanique réalisé entre la machine (14) et l'outil (12) et dès qu'elles sont alimentées en énergie, les valves d'embrayage du côté de changement rapide (22, 23) et les valves d'embrayage du côté de l'adaptateur (24, 25) sont commandées de façon à ce que s'ouvrent de façon active d'abord les valves d'embrayage du côté de l'adaptateur (24, 25), puis ensuite les valves d'embrayage du côté de changement rapide (22, 23).

2. Dispositif de changement rapide (10) d'après la revendication 1, **caractérisé en ce que** les valves d'embrayage du côté de changement rapide et du côté de l'adaptateur (22, 23 ; 24, 25) sont formées comme des valves actives à actionnement hydraulique et que le raccord hydraulique (20) présente en outre au moins une première et au moins une deuxième valve de commande (30, 32) avec chacune une section de valve du côté de changement rapide et du côté de l'adaptateur (30a, 32a ; 30b, 32b), les valves de commande (30, 32) étant reliées par un circuit de commande (34) l'une à l'autre, avec les valves d'embrayage hydrauliques (22, 23 ; 24, 25) et avec le système hydraulique de la machine de façon à entraîner, à travers le circuit de commande (34), d'abord un afflux de fluide hydraulique, passant par la/les première(s) valve(s) de commande (30), de l'échangeur rapide (16) jusqu'à l'adaptateur (18) et aux valves d'embrayage du côté de l'adaptateur (24, 25) - ouverture des valves d'embrayage du côté outil (24, 25) -, puis un afflux de fluide hydraulique en partance de l'adaptateur (18), passant par la/les deuxième(s) valve(s) de commande (32), jusqu'à l'échangeur rapide (16) et aux valves d'embrayage du côté de changement rapide (22, 23) - ouverture des valves d'embrayage du côté de changement rapide (22, 23) - et, lorsque les valves d'embrayage (22, 23 ; 24, 25) se ferment, un reflux de fluide hydraulique en provenance des valves d'embrayage du côté de changement rapide (22, 23), passant par la/les deuxième(s) valve(s) de commande (32), jusqu'à l'adaptateur (18) - fermeture des valves d'embrayage du côté de changement rapide (22, 23) - suivi d'un reflux en provenance des valves d'embrayage du côté de l'adaptateur (24, 25), passant par lalles première(s) valve(s) de commande (30), jusqu'à l'échangeur rapide (16) - fermeture des valves d'embrayage du côté de changement rapide (24, 25).

3. Dispositif de changement rapide (10) d'après la revendication 2, **caractérisé en ce que** les valves de commande (30, 32) sont formées comme des valves à faible course.

4. Dispositif de changement rapide (10) d'après la revendication 1, **caractérisé en ce que** les valves d'embrayage du côté de changement rapide et du côté de l'adaptateur (22, 23 ; 24, 25) sont formées comme des valves actives à actionnement mécanique, pneumatique ou électromagnétique.
